# FASCICULE DE BREVET EUROPEEN

(11) **EP 4 469 309 B1**
(45) Date de publication et mention de la délivrance du brevet: **01.07.2026**
(21) Numéro de dépôt: 23700756.2
(22) Date de dépôt: 11.01.2023
(51) Int. Cl.: B60R 13/02

(54) **PIÈCE DE GARNITURE INTÉRIEURE DE VÉHICULE INTÉGRANT AU MOINS UN ÉLÉMENT FONCTIONNEL ET SON PROCÉDÉ DE FABRICATION**
FAHRZEUGINNENVERKLEIDUNGSTEIL MIT MINDESTENS EINEM FUNKTIONSELEMENT UND VERFAHREN ZUR HERSTELLUNG DAVON
VEHICLE INTERIOR TRIM PART INTEGRATING AT LEAST ONE FUNCTIONAL ELEMENT AND METHOD FOR MANUFACTURING SAME

(30) Priorité: 28.01.2022 FR 2200727
(43) Date de publication de la demande: 04.12.2024
(73) Titulaire: SMRC Automotive Holdings Netherlands B.V., 1101 BA Amsterdam (NL)
(72) Inventeur: SAELEN, Marc, 59251 ALLENNES LES MARAIS (FR)
(74) Mandataire: Ipsilon
(86) Numéro de dépôt international: PCT/EP2023/050565
(87) Numéro de publication internationale: WO 2023/143917

(56) Documents cités:
- EP-A2- 0 732 865
- DE-A1- 10 336 427
- DE-A1- 102005 026 766
- DE-A1- 102010 039 270
- JP-A- S63 284 048
- US-A- 5 683 747

## Description

La présente invention concerne le domaine des équipements intérieurs et notamment l'intégration de fonctions dans le corps même des pièces de garniture ou d'habillage, en particulier les pièces d'habillage intérieur des véhicules, au cours de leur fabrication.

Ces pièces de garniture ou d'habillage comprennent, de manière non limitative, les tableaux de bord, les panneaux de porte, les panneaux de console centrale, les montants de fenêtres, et pièces d'ébénisterie analogues, etc...

Les fonctions visées, incluant par exemple le chauffage, l'éclairage, la détection, la mesure, la réception, la transmission, etc...., fournissent des services utiles et améliorent le confort des utilisateurs, conducteurs et/ou passagers. Ils nécessitent généralement une connexion à une source d'énergie ou un dispositif électronique pour leur activation ou fonctionnement.

Dans ce contexte, l'invention concerne une pièce de garniture intérieure de forme tridimensionnelle, préférentiellement autoportante, comprenant au moins un élément fonctionnel, ainsi que son procédé de fabrication.

L'invention s'adresse plus particulièrement aux pièces structurelles de garnissage non planes, c'est-à-dire présentant une faible épaisseur par rapport à leur extension surfacique. Elles consistent principalement en des pièces autoportantes, de préférence sensiblement au moins localement rigides, présentant une forme non plane, de préférence 3D.

Un problème général sous-jacent réside dans l'intégration du ou des éléments fonctionnels dans la pièce de garniture durant la fabrication même de la pièce et en la positionnant aussi près que possible de sa surface exposée ou visible (face apparente ou surface A), afin de fournir les propriétés d'interaction les plus efficaces avec l'intérieur du véhicule et ses occupants, ce tout en garantissant simultanément une connectabilité aisée (à une source d'alimentation électrique ou à un dispositif électrique/électronique) lors de l'installation de la pièce de garniture dans son site de montage, avec une localisation judicieuse, le cas échéant adaptable, du site de raccordement.

L'invention concerne plus particulièrement les pièces de garniture comprenant au moins : une couche support structurelle sous-jacente, une couche d'habillage ou décorative visible sur ou formant la face exposée de la pièce de garniture et au moins un élément fonctionnel surfacique mince avec au moins une zone ou composante fonctionnelle située entre les couches de support et décoratives susmentionnées et en contact direct sur toute sa surface avec au moins la couche support, préférentiellement avec les deux couches.

L'élément fonctionnel peut s'étendre ou non sur toute la surface de la couche de support, et plusieurs éléments peuvent être prévus. Le ou chaque élément fonctionnel est disposé à un endroit spécifique sur ladite couche de support.

Un problème majeur résultant des possibilités variées d'agencement évoquées ci-dessus est celui de la réalisation de la connexion de l'élément fonctionnel, en particulier en fonction du positionnement relatif entre l'élément fonctionnel intégré dans la pièce et le dispositif ou la source à laquelle il doit être connecté. Dans la plupart des cas, le moyen de connexion émerge latéralement de la pièce, dans le chant de cette dernière, limitant ainsi fortement les possibilités de localisation de la connexion (voir par exemple DE 10 2005026766).

Pour tenter de résoudre ce problème, il a été proposé, par exemple dans le document DE 10 2015220253, de prévoir pour l'élément fonctionnel un moyen de connexion s'étendant à travers la couche support et qui fournit sur la face arrière de ladite couche support, opposée à la face exposée ou apparente, un site ou une zone de connexion avec une source d'alimentation électrique ou un dispositif électrique/électronique.

Or, cette solution existante présente plusieurs inconvénients. Tout d'abord, elle fait appel à au moins deux pièces de connexion spécifiques séparées. Elles fournissent par ailleurs un site de connexion qui est situé dans le plan de la face arrière de la pièce de garniture et requiert un câble supplémentaire pour établir l'interconnexion. Les pièces de connexion utilisées, qui traversent la couche support, génèrent une discontinuité structurelle et mécanique dans cette couche et le raccordement de ces pièces avec l'élément fonctionnel génère des pertes, impactant le rendement énergétique. Enfin, la mise en place de ces pièces génère aussi des défauts d'aspect au niveau de la face apparente et nécessite la mise en place additionnelle d'au moins une couche intermédiaire souple pour gommer ce défaut. Il en résulte un impact notable sur le coût de revient de la pièce.

Par les documents DE 10 2010 039270 A1 et EP 0 732 865 A2, on connait des pièces de garniture intérieure pour véhicule selon le préambule de la revendication 1, avec chacune un élément fonctionnel spécifique qui n'est pas compris entre deux couches et dont les moyens d'alimentation sont des lignes filaires.

Dans le contexte précité, le but de l'invention est de proposer une solution qui surmonte au moins une partie, de préférence la totalité, des inconvénients exposés précédemment et qui, avantageusement, ne modifie pas sensiblement un éventuel procédé de fabrication existant d'une pièce de garniture sans élément fonctionnel.

A cet effet, l'invention a pour objet une pièce de garniture selon le préambule de la revendication 1 et qui présente également les caractéristiques de la partie caractérisante de cette revendication.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1A] et
[Fig. 1B] sont des vues en coupe d'une pièce de garniture intérieure sous forme de panneau selon deux modes de réalisation de l'invention ;
[Fig. 2A] et
[Fig. 2B] sont des vues du détail A de la figure 2B illustrant deux variantes de réalisation de la pièce de la figure 2B ;
[Fig. 3] est une vue en coupe d'une pièce de garniture intérieure sous forme de panneau selon un troisième mode de réalisation de l'invention ;
[Fig. 4] est une vue du détail B de la figure 3 à une échelle différente ;
[Fig. 5A] et
[Fig. 5B] sont respectivement des vues de dessus (5A) et en élévation latérale et en coupe (5B) d'un élément fonctionnel surfacique faisant partie d'une pièce telle représentée sur les figures 1A, 1B et 3 ;
[Fig. 6] et
[Fig. 7] sont des vues simplifiées en coupe de deux types de moules d'injection pouvant être utilisés pour la mise en œuvre du procédé de fabrication d'une pièce de garniture selon l'invention ;
[Fig. 8A],
[Fig. 8B],
[Fig. 8C],
[Fig. 8D],
[Fig. 8E],
[Fig. 8F],
[Fig. 8G],
[Fig. 8H],
[Fig. 8I],

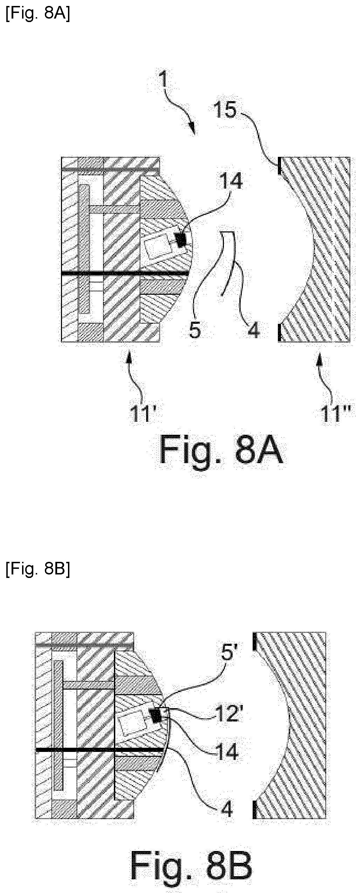

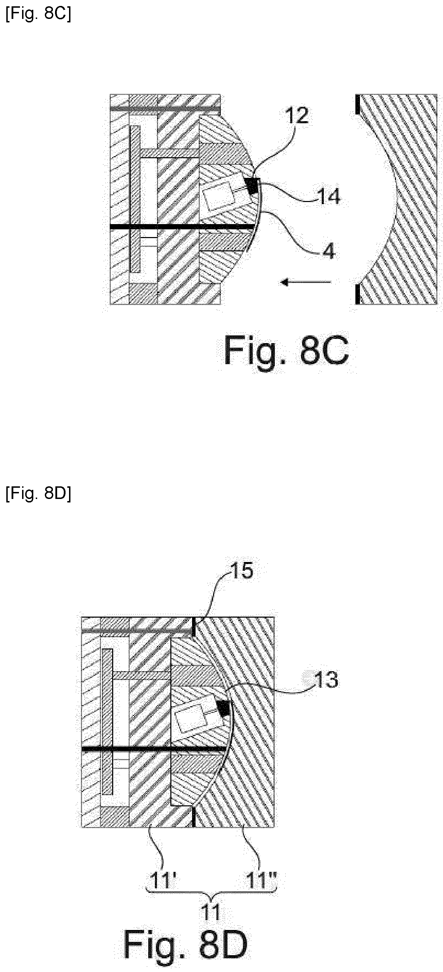

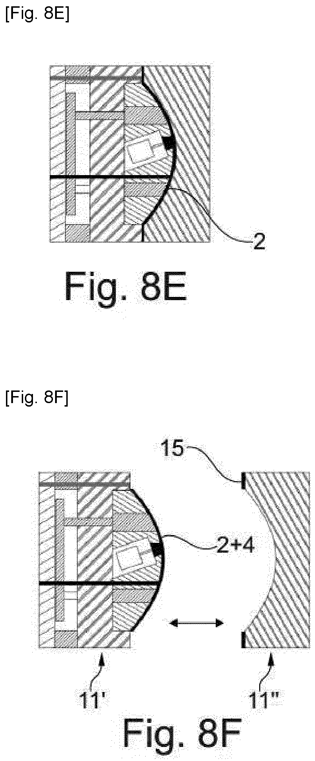

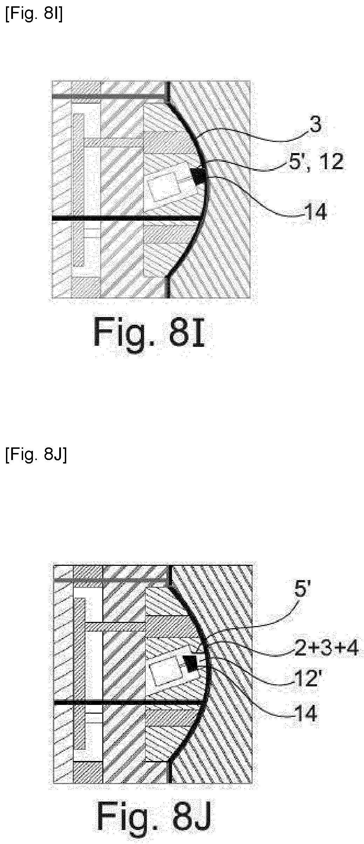

[Fig. 8J] et

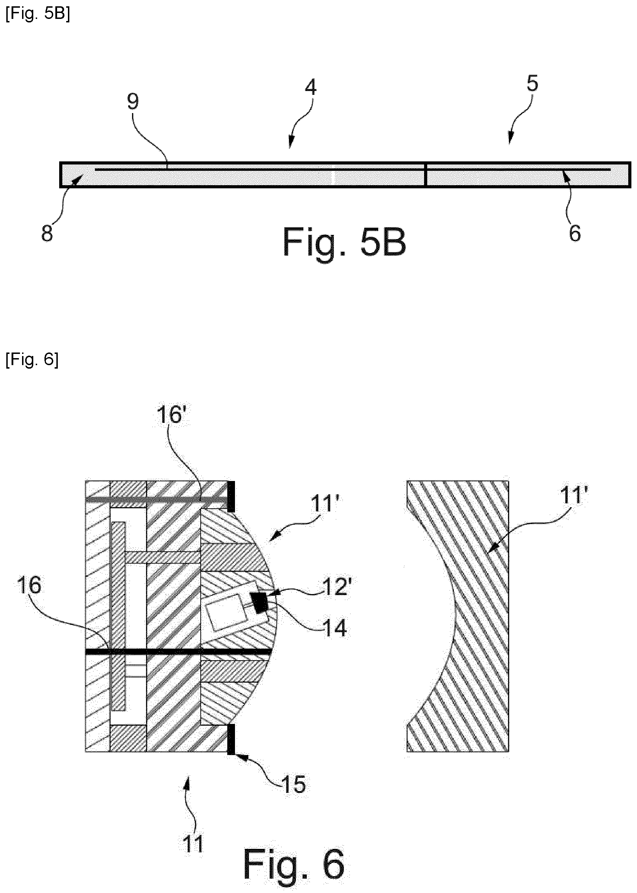

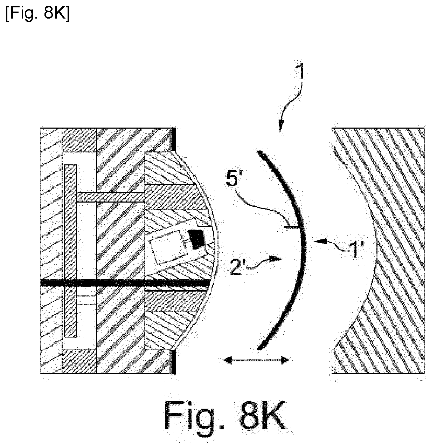

[Fig. 8K] illustrent les principales étapes d'un procédé de fabrication d'une pièce de garniture intérieure selon l'invention, en utilisant un moule tel que représenté figure 6.

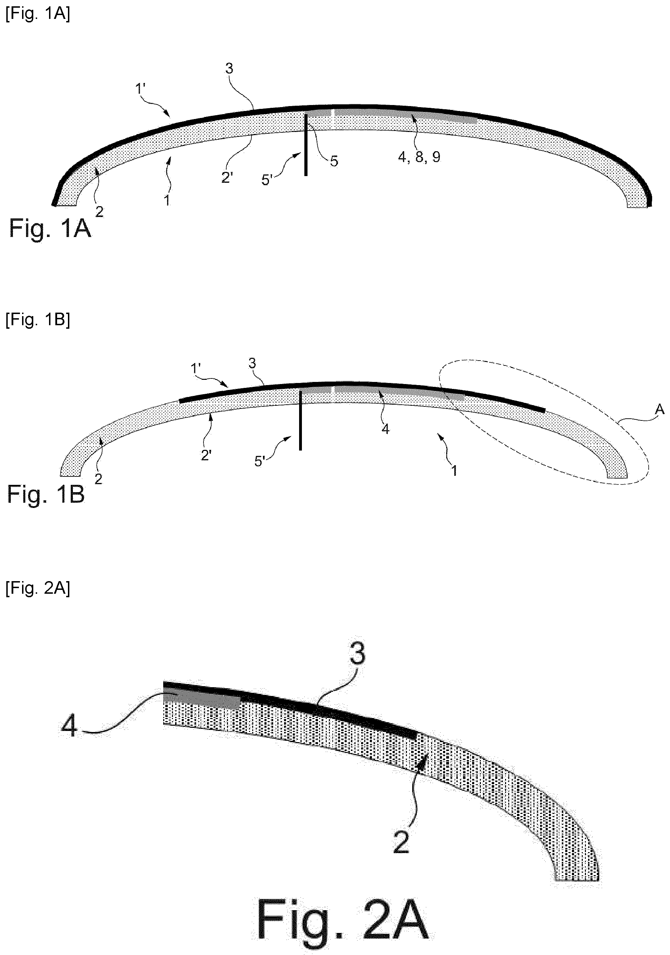

Les figures 1 à 4 et 8K illustrent, à titre d'exemples, une pièce (1) de garniture intérieure pour véhicule, présentant une forme tridimensionnelle, une face apparente (1') et une constitution multicouche, ladite pièce (1) comprenant au moins une couche support (2) et au moins une couche d'habillage (3) laquelle contribue à la surface apparente (1') de la pièce (1), en partie ou en totalité.

Au moins un élément fonctionnel (4) à structure surfacique fine est en outre intégré dans l'épaisseur de ladite pièce (1) en étant pris en sandwich entre les couches de support et d'habillage (2, 3), ces dernières consistant en des couches venant de moulage par injection et étant mutuellement assemblées par contact direct et liaison matière en dehors de la zone occupée par l'élément fonctionnel (4). Ce dernier comprend au moins un moyen (5) de connexion ou de raccordement en vue de son alimentation électrique et/ou de la transmission de signaux électriques.

Conformément à l'invention, le moyen (5) de connexion consiste en une extension allongée faisant partie de l'élément fonctionnel (4) et qui s'étend à travers la couche support (2), en étant encastré directement dans son matériau constitutif, ce jusqu'à la face arrière (2') de cette couche, opposée à la face apparente (1').

Ainsi, l'invention fournit une possibilité de raccordement de l'élément fonctionnel (4) à l'arrière de la pièce (1) et au-delà et à distance de la face arrière (2') de la couche de support (2). En outre, aucune pièce additionnelle n'est mise en œuvre, l'impact sur la structure de la couche support (2) est négligeable, le moyen de connexion est solidement ancré dans cette couche et ce de manière étanche. Enfin, l'intégration de l'élément fonctionnel (4) et de son moyen de connexion (5) dans la couche support (2), dans laquelle elle est partiellement noyée en étant enrobée totalement par son matériau, ne modifie pas sensiblement le procédé de fabrication de la pièce (1), les opérations supplémentaires s'intégrant aisément dans la séquence des opérations de fabrication de la pièce (1) sans élément fonctionnel (4). Cet élément fonctionnel (4) peut s'étendre sur toute la surface de la pièce (1), mais avantageusement seulement sur une partie de celle-ci, comme le montrent les figures annexées.

En accord avec l'invention le ou chaque élément fonctionnel (4) est composé d'une partie fonctionnelle principale (4', 9), disposée entre les couches de support et d'habillage (3, 4) et en contact direct avec elles, et d'une extension latérale allongée (5) formant moyen de connexion et intégrant au moins une ligne conductrice (6), ces deux composantes constitutives étant réalisés d'un seul tenant et présentent tous les deux une structure plate de faible épaisseur.

En réalisant l'élément fonctionnel (4) avec son moyen de connexion (5) comme partie intégrante, lors de sa fabrication, on s'assure d'une qualité de raccordement optimale, d'une grande intégrité structurelle et d'une mise en œuvre simplifiée (un seul élément à manipuler). De plus, la forme plate de l'extension (5) favorise un passage non impactant sur la structure de la couche support (2) et un encombrement minimal selon sa dimension en épaisseur.

Préférentiellement, l'extension allongée (5) de l'élément fonctionnel (4) comprend une portion (5') qui s'étend librement au-delà de la face arrière (2') de la couche support (2) et qui comporte une zone ou un site (7) de raccordement électrique, intégré(e) ou rapporté(e), préférentiellement situé(e) au niveau ou à proximité de l'extrémité libre de ladite portion (5'). Cette portion (5') permet de décaler la zone ou le site (7) de la face arrière, facilitant ainsi le branchement. Cette zone (7) peut par exemple consister en une zone d'extrémité dénudée de l'extension allongée (5). En variante, un site du type connecteur plat peut être envisagé.

Dans le véhicule, la source des signaux ou de l'alimentation peut être située à proximité immédiate de la face arrière de la pièce (1) et dans ce cas la longueur de la portion (5') est déterminée pour pouvoir réaliser un branchement direct du site (7) sur la source.

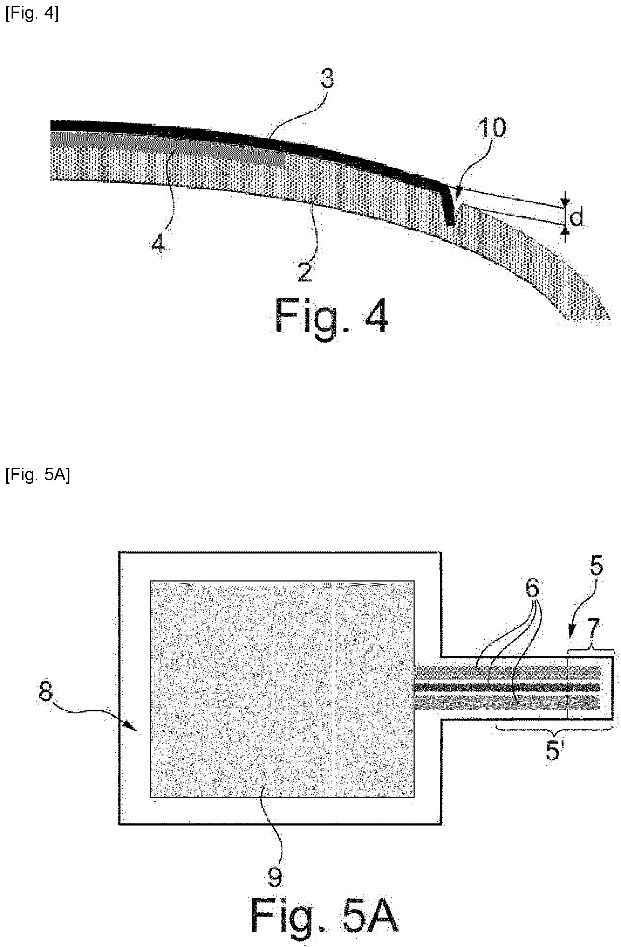

Comme le montrent les figures 5A et 5B, et selon une caractéristique possible de l'invention, l'élément fonctionnel (4) peut comprendre une structure support (8) à extension surfacique, laquelle porte à la manière d'une couche support, ou intègre à la manière d'une matrice, au moins un composant électrique ou électronique (9) réalisant la fonction visée lorsqu'il est activé ou alimenté électriquement. Cette structure support (8) s'étend avantageusement également d'un seul tenant au niveau de l'extension allongée (5) et supporte ou intègre sa ou ses ligne(s) d'alimentation ou de transmission (6) et éventuellement sa zone ou son site (7) de raccordement électrique. Cette structure support (8) avec ledit au moins un composant (9), portée par elle ou intégrée à elle, forment ensemble la partie fonctionnelle principale (4').

Différents matériaux peuvent être envisagés pour la structure support (8) tel qu'un grillage, un textile (non-tissé, tissé, tricoté, ...), un film, une peau, une couche plastique ou métallique ou analogue.

Préférentiellement, le matériau constitutif de la structure support (8) garde sa cohérence et est résistant aux températures des matériaux injectés. Il peut en outre être chimiquement compatible et adhérent avec ces derniers, pour assurer une bonne liaison matière avec eux.

Le composant (9) peut quant à lui être également de différentes formes, natures et types, selon la ou les fonctions à réaliser : structure filaire conductrice (par exemple filet chauffant, antenne émettrice/réceptrice, ...), encre conductrice activable, film électroluminescent ou analogue.

Afin d'aboutir à une pièce (1) présentant une bonne tenue et une bonne cohérence structurelle et un aspect qualitatif, la couche d'habillage (3) qui recouvre l'élément fonctionnel (4) s'étend au-delà des limites périphériques de ce dernier, recouvre partiellement ou totalement la couche support (2) et consiste en un matériau compatible, au moins en termes d'adhérence chimique, avec celui de ladite couche support (2), en étant identique ou différent en termes de composition, d'aspect, de couleur et/ou de toucher.

Comme le montre la figure 1A, la couche d'habillage (3) peut recouvrir la totalité de la surface de la couche support (2) et constituer à elle seule la face apparent (1').

En accord avec une première variante de réalisation, illustrée sur les figures 1B et 2A, la couche d'habillage (3) peut ne recouvrir que partiellement la couche support (2), les surfaces respectives visibles ou exposées des deux couches (2 et 3), qui forment ensemble la face apparente (1') de la pièce (1), étant mutuellement affleurantes (pas de décalage entre elles au niveau de la face apparente).

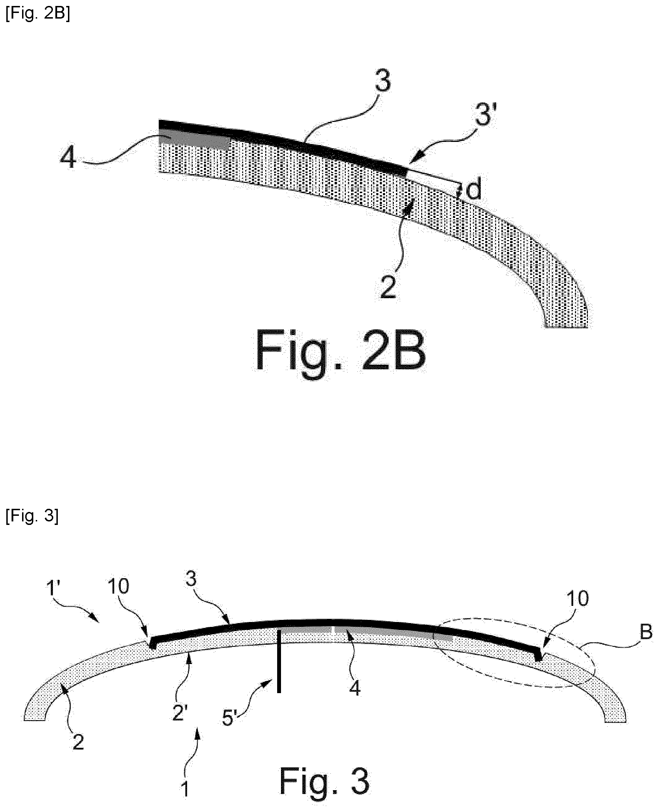

En accord avec une deuxième variante de réalisation, illustrée sur les figures 1B et 2B, la couche d'habillage (3) peut ne recouvrir que partiellement la couche support (2), les surfaces respectives visibles ou exposées des deux couches (2 et 3), qui forment ensemble la face apparente (1') de la pièce (1), présentant entre elles un décalage avec désaffleurement (d). Dans ce cas, ladite couche d'habillage (3) est proéminente ou en retrait par rapport à la couche support (2) d'au moins une partie de son épaisseur et constitue un bord ou un épaulement (3'), positif ou négatif, par rapport à cette couche support (2). Sur les figures 1B et 2B, seuls des épaulements positifs (couche d'habillage proéminente) sont représentés.

En accord avec une troisième variante de réalisation, illustrée sur les figures 3 et 4, la couche d'habillage (3) ne recouvre que partiellement la couche support (2), un renfoncement linéaire périphérique (10), telle qu'une gorge ou une rainure par exemple, délimitant la zone de la surface de la couche support (2) recouverte par la couche d'habillage (3). Ce renfoncement (10) peut recevoir avantageusement au moins une partie du bord latéral (3') circonférentiel de ladite couche d'habillage (3).

En particulier lorsque le composant (9) réalise une fonction de chauffage, il peut être prévu que le matériau composant la couche support (2) présente, au moins dans une région située sous l'élément fonctionnel (4), une structure au moins partiellement alvéolaire, intégrant par exemple une pluralité de cavités emplies d'air. On aboutit ainsi à une isolation thermique en direction de la face arrière (2') et à une meilleure diffusion de la chaleur générée vers la couche apparente (1').

En accord avec un mode de réalisation préféré de l'invention, ressortant des figures 1 à 4 à titre d'exemple illustratif, la partie fonctionnelle principale (4', 9) de l'élément fonctionnel (4) à structure surfacique fine est entièrement recouverte, de part et d'autre, respectivement par la couche de support (2) et par la couche d'habillage (3), en étant intégrée dans l'épaisseur de ladite pièce (1) par encapsulation entre ces deux couches (2 et 3). On aboutit ainsi, lorsque l'élément fonctionnel (4) ne correspond en surface qu'à une partie de la couche d'habillage (3) et que celle-ci ne correspond en surface qu'à une partie de la couche support (2), à une pièce (1) présentant une région centrale à trois couches (2, 3, 4) distinctes, superposées en épaisseur et sensiblement continues. Cette première région centrale est entourée périphériquement d'une deuxième zone en forme de cadre ou d'anneau à deux couches (2et 3) dans son épaisseur. Cette deuxième zone peut elle-même être bordée sur certains côtés, ou être totalement entourée périphériquement sur tous les côtés, d'une troisième zone sous forme de bande(s) jointives ou non et constituée d'une seule couche (2) en épaisseur.

De plus, ou indépendamment du mode de réalisation préféré ci-dessus, cette partie fonctionnelle principale (4',9) et l'extension allongée (5) formant moyen de connexion sont avantageusement montées sur, ou intégrées à, une même structure support surfacique (8) constituant ainsi ensemble un élément fonctionnel (4) structurellement d'un seul tenant. On dispose ainsi d'un élément fonctionnel avec une grande cohérence, à structure homogène et facile à manipuler et à travailler.

L'invention a également pour objet un procédé de fabrication d'une pièce de garniture intérieure (1) pour véhicule, présentant une forme tridimensionnelle, une face apparente (1') et une constitution multicouche. Cette pièce (1) comprend au moins une couche support (2) et au moins une couche d'habillage (3) laquelle fournit la surface apparente (1') de la pièce (1), au moins un élément fonctionnel (4) à structure surfacique fine étant intégré dans l'épaisseur de ladite pièce (1) en étant pris en sandwich entre les couches de support et d'habillage (3, 4), cet élément fonctionnel (4) comprenant au moins un moyen (5) de connexion ou de raccordement en vue de son alimentation électrique et/ou de la transmission de signaux électriques.

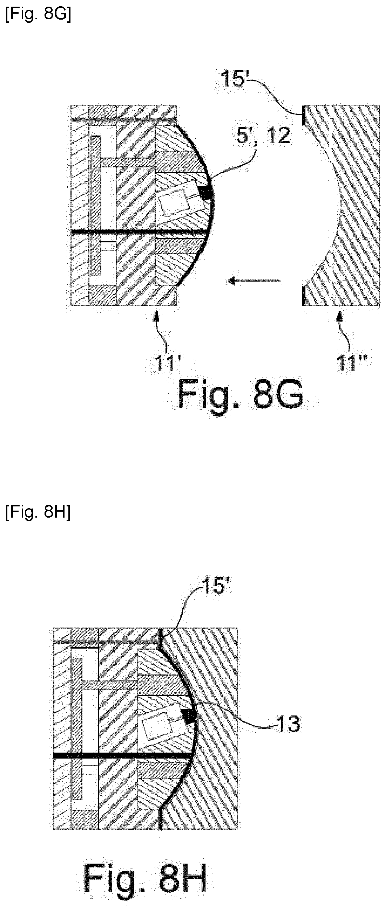

En accord avec un premier mode de réalisation, illustré sur les figures 8A à 8K et mettant en œuvre un moule représenté figure 6, ce procédé consiste à fournir un élément fonctionnel (4) avec un moyen (5) de connexion sous la forme d'une extension allongée faisant partie dudit élément fonctionnel (4), à mettre en place cet élément fonctionnel (4) dans un moule d'injection (11) à deux parties (11' et 11") en le disposant sur une première partie (11') du moule (11) formant poinçon de telle manière qu'une portion (5') extrémale de l'extension allongée (5) se trouve logée dans une cavité étanche (12) dudit poinçon (11')-figures 8A à 8C-, à fermer le moule (11) par rapprochement et contact mutuel des deux parties formant poinçon (11') et matrice (11") de manière à former une chambre d'injection (13) et à injecter le matériau destiné à former la couche support (2)-figures 8D à 8F-, l'extension allongée (5) se retrouvant ainsi encastré directement dans le matériau de la couche support (2) qu'elle traverse, à l'exception de sa portion extrémale (5'), à modifier la chambre d'injection (13) en modifiant l'écartement des deux parties (11' et 11") du moule (11) à l'état fermé-figures 8G et 8H-, à injecter le matériau destiné à former la couche d'habillage (3) lequel va recouvrir l'élément fonctionnel (4) et la couche support (2)-figures 8I et 8J-, cette dernière et la couche d'habillage (4) étant ainsi mutuellement assemblées par contact direct et liaison matière en dehors de la zone occupée par l'élément fonctionnel (4), et enfin à ouvrir le moule (11) et à extraire la pièce de garniture (1) fabriquée-figure 8K.

Avantageusement, la modification de l'écartement des deux parties du moule (11) à l'état fermé de ce dernier est réalisée par mise en place, au niveau du plan de joint dudit moule (11), de cales de réglage (15, 15') d'épaisseurs différentes.

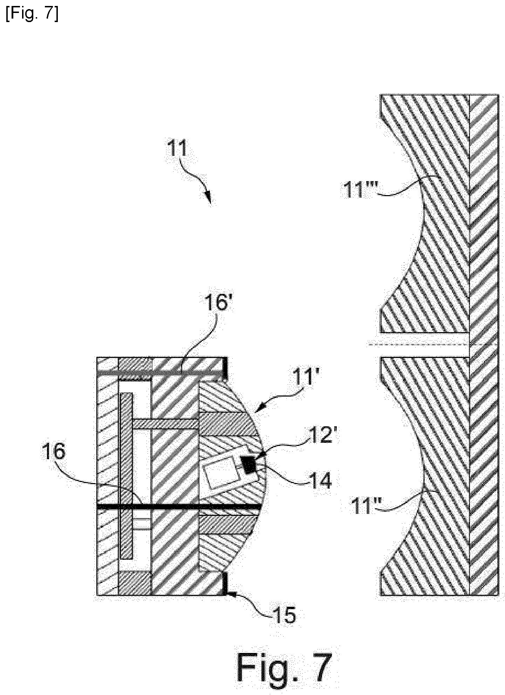

En accord avec un second mode de réalisation, mettant en œuvre le moule représenté figure 7, ce procédé consiste à fournir un élément fonctionnel (4) avec un moyen (5) de connexion sous la forme d'une extension allongée faisant partie dudit élément fonctionnel (4), à mettre en place cet élément fonctionnel (4) dans un moule d'injection (11) à trois parties (11', 11", 11‴), à savoir un poinçon et deux matrices, en le disposant sur une première partie (11') du moule (11) formant poinçon de telle manière qu'une portion (5') extrémale de l'extension allongée (5) se trouve logée dans une cavité étanche (12) dudit poinçon (11'), à fermer le moule (11) par rapprochement et contact mutuel du poinçon (11') et d'une première matrice (11") de manière à former une chambre d'injection (13) et à injecter le matériau destiné à former la couche support (2), l'extension allongée (5) se retrouvant ainsi encastré directement dans le matériau de la couche support (2) qu'elle traverse, à l'exception de sa portion extrémale (5'), à modifier la chambre d'injection (13) en écartant la première matrice (11") et la remplaçant par la seconde matrice (11"'), qui est rapprochée et mise en contact avec le poinçon (11"), à injecter le matériau destiné à former la couche d'habillage (3) lequel va recouvrir l'élément fonctionnel (4) et la couche support (2), cette dernière et la couche d'habillage (3) étant ainsi mutuellement assemblées par contact direct et liaison matière en dehors de la zone occupée par l'élément fonctionnel (4), et enfin à ouvrir le moule (11) et à extraire la pièce de garniture (1) fabriqué.

Préférentiellement, et comme cela ressort des figures 6, 7 et 8, le logement ou la mise en place de la portion extrémale (5') de l'extension allongée (5) dans une cavité étanche (12) du poinçon (11') consiste à mettre en place ladite portion (5') dans une cavité du poinçon (11') pourvue d'un moyen de fermeture étanche (14) et à actionner ledit moyen de fermeture (14) de manière à isoler ladite portion (5') de l'intérieur de la chambre d'injection (13) et à la pincer pour la maintenir en place, de même que l'élément fonctionnel (4), sur le poinçon (11') et dans le moule (11). La portion (5') est en fait coincée dans l'ouverture (12') par le clapet ou bouchon mobile (14) qui l'obture de manière étanche.

L'homme du métier comprend que la chambre étanche (12) est formée (par déplacement adéquat du bouchon ou clapet fermant son ouverture) avant fermeture du moule pour l'injection de la couche support (2) et que son ouverture est libérée (par déplacement contraire du bouchon ou clapet) avant extraction de la pièce (1) ou au moment de l'ouverture du moule.

Plus précisément, il peut être prévu que la cavité étanche (12) comprenne une cavité formée dans le poinçon (11') et dans laquelle est montée une cale ou un bouchon mobile (14) apte à obturer l'ouverture (12') de la cavité (12) vers la surface du poinçon (11'), et donc vers la chambre d'injection (13), ce bouchon (14) pouvant être déplacé entre une position escamotée dans laquelle il libère ladite ouverture (12') et une position déployée dans laquelle il obture de manière étanche ladite ouverture (12'), en étant affleurant au niveau de la surface du poinçon (11') et en pinçant la portion extrémale (5') de l'extension allongée (5) introduite dans la cavité (12) contre le bord de ladite ouverture (12').

Afin d'obtenir une couche de substrat au moins localement alvéolée, un agent moussant peut être injecté avec le matériau destiné à former ladite couche support (2).

Lorsqu'un effet visuel ou un état de surface particulier est recherché, il peut être envisagée de soumettre la face apparente de la couche d'habillage (3), et éventuellement une partie de surface apparente de la couche support (2), après extraction de la pièce de garniture (1) du moule (11), à au moins un traitement de surface complémentaire, tel qu'un dépôt, un traitement chimique, un traitement mécanique ou analogue.

La pièce (1) obtenue par ces procédés présente avantageusement au moins certaines des autres caractéristiques indiquées précédemment.

L'invention concerne également, comme cela ressort des figures 6 à 8, un moule (11) pour la réalisation du procédé de fabrication décrit ci-dessus.

Ce moule comprend deux parties constitutives mobiles l'une par rapport à l'autre, à savoir un poinçon (11') pourvu de moyens (16, 16') d'injection des matériaux destinés à constituer la couche support (2) et la couche d'habillage (3) et, avantageusement, de moyens (17) d'éjection de la pièce de garniture (1) obtenue, et au moins une matrice (11", 11‴) définissant l'état de surface de la face apparente (1') de la pièce (1) et pouvant délimiter par coopération avec le poinçon (11') une chambre d'injection (13), laquelle peut présenter deux volumes différents, en fonction par exemple des épaisseurs de cales de réglage (16, 16') différentes mises en place.

Ce moule est caractérisé en ce que le poinçon (11') comporte, d'une part, une cavité (12) pour la réception d'une extension allongée (5) d'un élément fonctionnel surfacique (4) placé sur ledit poinçon (11'), ladite cavité comportant une ouverture (12') vers la chambre d'injection (13) ou de moulage par injection , et, d'autre part, un moyen (14) de fermeture étanche de cette cavité (12), plus précisément de son ouverture (12'), permettant de pincer ladite extension allongée (5) et d'en isoler une partie extrémale (5') par rapport à la chambre d'injection (13).

Ce moule peut comporter une unique matrice (11") comme le montre la figure 7, ou alors deux matrices (11" et 11‴) différentes.

Comme le montrent les figures 6 à 8, le poinçon (11') intègre avantageusement, en plus des moyens d'injection des matériaux constitutifs des couches support et d'habillage, également des moyens d'éjection de la pièce finale.

On peut noter que les couches de support (2) et d'habillage (3) sont toutes deux réalisées par injection dans le même moule (11) et préférentiellement dans la même phase de moulage par injection (moulage simultanée), c'est-à-dire la même moulée par injection surmoulage.

## Revendications

1. Pièce (1) de garniture intérieure pour véhicule, présentant une forme tridimensionnelle, une face apparente (1') et une constitution multicouche, ladite pièce (1) comprenant au moins une couche support (2) et au moins une couche d'habillage (3) laquelle contribue à la surface apparente (1') de la pièce (1), au moins un élément fonctionnel (4) à structure surfacique fine étant intégré dans l'épaisseur de la dite pièce (1) en étant pris en sandwich entre les couches de support et d'habillage (2, 3), ces dernières consistant en des couches venant de moulage par injection et étant mutuellement assemblées par contact direct et liaison matière en dehors de la zone occupée par l'élément fonctionnel (4) considéré, ce dernier comprenant au moins un moyen (5) de connexion ou de raccordement en vue de son alimentation électrique et/ou de la transmission de signaux électriques, lequel s'étend à travers la couche support (2), en étant encastré directement dans son matériau constitutif, ce jusqu'à la face arrière (2') de cette couche, opposée à la face apparente (1'),
pièce (1) caractérisée en ce le moyen (5) de connexion consiste en une extension allongée faisant partie de l'élément fonctionnel (4) et
en ce que le ou chaque élément fonctionnel (4) est composé, d'une part, d'une partie fonctionnelle principale (4', 9), disposée entre les couches de support et d'habillage (2 et 3) et en contact direct avec elles, et, d'autre part, de l'extension latérale allongée (5) formant moyen de connexion et intégrant au moins une ligne conductrice (6), ces deux composantes constitutives étant réalisées d'un seul tenant et présentent tous les deux une structure plate de faible épaisseur.

2. Pièce de garniture intérieure (1) selon la revendication 1, **caractérisée en ce que** l'extension allongée (5) de l'élément fonctionnel (4) comprend une portion (5') qui s'étend librement au-delà de la face arrière (2') de la couche support (2) et qui comporte une zone ou un site (7) de raccordement électrique, intégré(e) ou rapporté(e), préférentiellement situé(e) au niveau ou à proximité de l'extrémité libre de ladite portion (5').

3. Pièce de garniture intérieure (1) selon l'une quelconque des revendications 1 et 2, **caractérisée en ce que** l'élément fonctionnel (4) comprend une structure support (8) à extension surfacique, laquelle porte à la manière d'une couche support, ou intègre à la manière d'une matrice, au moins un composant électrique ou électronique (9) réalisant la fonction visée lorsqu'il est activé ou alimenté électriquement, cette structure support (8) s'étendant avantageusement également d'un seul tenant au niveau de l'extension allongée (5) et supporte ou intègre sa ou ses ligne(s) d'alimentation ou de transmission (6) et éventuellement sa zone ou son site (7) de raccordement électrique.

4. Pièce de garniture intérieure (1) selon l'une quelconque des revendications 1 à 3, **caractérisée en ce que** la couche d'habillage (3) qui recouvre l'élément fonctionnel (4) s'étend au-delà des limites périphériques de ce dernier, recouvre partiellement ou totalement la couche support (2) et consiste en un matériau compatible, au moins en termes d'adhérence chimique, avec celui de ladite couche support (2), en étant identique ou différent en termes de composition, d'aspect, de couleur et/ou de toucher.

5. Pièce de garniture intérieure (1) selon la revendication 4, **caractérisée en ce que** la couche d'habillage (3) ne recouvre que partiellement la couche support (2), les surfaces respectives visibles ou exposées des deux couches (2 et 3), qui forment ensemble la face apparente (1') de la pièce (1), étant mutuellement affleurantes.

6. Pièce de garniture intérieure (1) selon la revendication 4, **caractérisée en ce que** la couche d'habillage (3) ne recouvre que partiellement la couche support (2), les surfaces respectives visibles ou exposées des deux couches (2 et 3), qui forment ensemble la face apparente (1') de la pièce (1), présentant entre elles un décalage avec désaffleurement (d), ladite couche d'habillage (3) étant proéminente ou en retrait par rapport à la couche support (2) d'au moins une partie de son épaisseur et constitue un bord ou un épaulement (3'), positif ou négatif, par rapport à cette couche support (2).

7. Pièce de garniture intérieure (1) selon l'une quelconque des revendications 4 à 6, **caractérisée en ce que** la couche d'habillage (3) ne recouvre que partiellement la couche support (2), un renfoncement linéaire périphérique (10), telle qu'une gorge ou une rainure par exemple, délimitant la zone de la surface de la couche support (2) recouverte par la couche d'habillage (3), ce renfoncement (10) recevant avantageusement au moins une partie du bord latéral (3') circonférentiel de ladite couche d'habillage (3).

8. Pièce de garniture intérieure (1) selon l'une quelconque des revendications 1 à 7, **caractérisée en ce que** le matériau composant la couche support (2) présente, au moins dans une région située sous l'élément fonctionnel (4), une structure au moins partiellement alvéolaire, intégrant par exemple une pluralité de cavités emplies d'air.

9. Pièce de garniture intérieure (1) selon l'une quelconque des revendications 1 à 8, **caractérisée en ce qu'**une partie fonctionnelle principale (4', 9) de l'élément fonctionnel (4) à structure surfacique fine est entièrement recouverte, de part et d'autre, respectivement par la couche de support (2) et par la couche d'habillage (3), en étant intégré dans l'épaisseur de la dite pièce (1) par encapsulation entre ces deux couches (2 et 3), et/ou **en ce que** cette partie fonctionnelle (4',9) et l'extension allongée (5) formant moyen de connexion sont montées sur, ou intégrées à, une même structure support surfacique (8) constituant ainsi ensemble un élément fonctionnel (4) structurellement d'un seul tenant.

10. Procédé de fabrication d'une pièce de garniture intérieure (1) pour véhicule, présentant une forme tridimensionnelle, une face apparente (1') et une constitution multicouche, ladite pièce (1) comprenant au moins une couche support (2) et au moins une couche d'habillage (3) laquelle fournit la surface apparente (1') de la pièce (1), au moins un élément fonctionnel (4) à structure surfacique fine étant intégré dans l'épaisseur de ladite pièce (1) en étant pris en sandwich entre les couches de support et d'habillage (3, 4), cet élément fonctionnel (4) comprenant au moins un moyen (5) de connexion ou de raccordement en vue de son alimentation électrique et/ou de la transmission de signaux électriques,
procédé **caractérisé en ce qu'**il consiste à fournir un élément fonctionnel (4) avec un moyen (5) de connexion sous la forme d'une extension allongée faisant partie dudit élément fonctionnel (4), à mettre en place cet élément fonctionnel (4) dans un moule d'injection (11) à deux parties (11' et 11"), à savoir un poinçon et une matrice, ou à trois parties (11', 11", 11‴), à savoir un poinçon et deux matrices, en le disposant sur une première partie (11') du moule (11) formant poinçon de telle manière qu'une portion (5') extrémale de l'extension allongée (5) se trouve logée dans une cavité étanche (12) dudit poinçon (11'), à fermer le moule (11) par rapprochement et contact mutuel des deux parties formant poinçon (11') et matrice (11"), ou du poinçon (11') et d'une première matrice (11"), de manière à former une chambre d'injection (13) et à injecter le matériau destiné à former la couche support (2), l'extension allongée (5) se retrouvant ainsi encastré directement dans le matériau de la couche support (2) qu'elle traverse, à l'exception de sa portion extrémale (5'), à modifier la chambre d'injection (13) en modifiant l'écartement des deux parties (11' et 11") du moule (11) à l'état fermé, ou en écartant la première matrice (11") et la remplaçant par la seconde matrice (11‴), qui est rapprochée et mise en contact avec le poinçon (11"), à injecter le matériau destiné à former la couche d'habillage (3) lequel va recouvrir l'élément fonctionnel (4) et la couche support (2), cette dernière et la couche d'habillage (4) étant ainsi mutuellement assemblées par contact direct et liaison matière en dehors de la zone occupée par l'élément fonctionnel (4), et enfin à ouvrir le moule (11) et à extraire la pièce de garniture (1) fabriquée.

11. Procédé de fabrication selon la revendication 10, **caractérisé en ce que** la modification de l'écartement des deux parties du moule (11) à l'état fermé de ce dernier est réalisée par mise en place, au niveau du plan de joint dudit moule (11), de cales de réglage (15, 15') d'épaisseurs différentes.

12. Procédé de fabrication selon l'une quelconque des revendications 10 et 11, **caractérisé en ce que** le logement de la portion extrémale (5') de l'extension allongée (5) dans une cavité étanche (12) du poinçon (11') consiste à mettre en place ladite portion (5') dans une cavité du poinçon (11') pourvue d'un moyen de fermeture étanche (14) et à actionner ledit moyen de fermeture (14) de manière à isoler ladite portion (5') de l'intérieur de la chambre d'injection (13) et à la pincer pour la maintenir en place, de même que l'élément fonctionnel (4) sur le poinçon (11') et dans le moule (11).

13. Procédé de fabrication selon l'une quelconque des revendications 10 à 12, **caractérisé en ce que** la cavité étanche (12) comprend une cavité formée dans le poinçon (11') et dans laquelle est montée une cale ou un bouchon mobile (14) apte à obturer l'ouverture (12') de la cavité (12) vers la surface du poinçon (11'), et donc vers la chambre d'injection (13), ce bouchon (14) pouvant être déplacé entre une position escamotée dans laquelle il libère ladite ouverture (12') et une position déployée dans laquelle il obture de manière étanche ladite ouverture (12'), en étant affleurant au niveau de la surface du poinçon (11') et en pinçant la portion extrémale (5') de l'extension allongée (5) introduite dans la cavité (12) contre le bord de ladite ouverture (12').

14. Procédé de fabrication selon l'une quelconque des revendications 10 à 13, **caractérisé en ce qu'**un agent moussant est injecté avec le matériau destiné à former la couche support (2).

15. Procédé de fabrication selon l'une quelconque des revendications 10 à 14, **caractérisé en ce que** la face apparente de la couche d'habillage (3), et éventuellement une partie de surface apparente de la couche support (2), est(sont) soumise(s), après extraction de la pièce de garniture (1) du moule (11), à au moins un traitement de surface complémentaire, tel qu'un dépôt, un traitement chimique, un traitement mécanique ou analogue.

16. Moule (11) pour la réalisation du procédé de fabrication selon l'une quelconque des revendications 10 à 15, comprenant deux parties constitutives mobiles l'une par rapport à l'autre, à savoir un poinçon (11') pourvu de moyens (16, 16') d'injection des matériaux destinés à constituer la couche support (2) et la couche d'habillage (3) et, avantageusement, de moyens (17) d'éjection de la pièce de garniture (1) obtenue, et au moins une matrice (11", 11‴) définissant l'état de surface de la face apparente (1') de la pièce (1) et pouvant délimiter par coopération avec le poinçon (11') une chambre d'injection (13), laquelle peut présenter deux volumes différents, en fonction par exemple des épaisseurs de cales de réglage (16, 16') différentes mises en place,
moule (11) **caractérisé en ce que** le poinçon (11') comporte, d'une part, une cavité (12) pour la réception d'une extension allongée (5) d'un élément fonctionnel surfacique (4) placé sur ledit poinçon (11'), ladite cavité comportant une ouverture (12') vers la chambre d'injection (13), et, d'autre part, un moyen (14) de fermeture étanche de cette cavité (12), plus précisément de son ouverture (12'), permettant de pincer ladite extension allongée (5) et d'en isoler une partie extrémale (5') par rapport à la chambre d'injection (13).

## Patentansprüche

1. Innenverkleidungsteil (1) für ein Fahrzeug, welches eine dreidimensionale Form, eine sichtbare Seite (1') und einen mehrschichtigen Aufbau aufweist, wobei das Teil (1) mindestens eine Stützschicht (2) und mindestens eine Deckschicht (3), die zu der sichtbaren Fläche (1') des Teils (1) beiträgt, umfasst, wobei mindestens ein Funktionselement (4) mit dünner flächiger Struktur in die Dicke des Teils (1) integriert ist und dabei sandwichartig zwischen der Stütz- und der Deckschicht (2, 3) angeordnet ist, wobei diese Letzteren aus Schichten bestehen, die durch Spritzgießen hergestellt wurden und durch direkten Kontakt und stoffschlüssige Verbindung außerhalb des von dem betrachteten Funktionselement (4) eingenommenen Bereichs miteinander verbunden sind, wobei dieses Letztere mindestens ein Verbindungs- oder Anschlussmittel (5) zwecks seiner Stromversorgung und/oder der Übertragung elektrischer Signale umfasst, welches sich durch die Stützschicht (2) hindurch erstreckt und dabei direkt in das Material, das diese bildet, eingebettet ist, und zwar bis zur hinteren Seite (2') dieser Schicht, die der sichtbaren Seite (1') gegenüberliegt
wobei das Teil (1) **dadurch gekennzeichnet ist, dass** das Verbindungsmittel (5) aus einer länglichen Verlängerung besteht, die Teil des Funktionselements (4) ist, und dadurch, dass das oder jedes Funktionselement (4) einerseits aus einem Hauptfunktionsteil (4', 9) besteht, der zwischen der Stütz- und der Deckschicht (2 und 3) angeordnet ist und sich in direktem Kontakt mit ihnen befindet, und andererseits aus der länglichen seitlichen Verlängerung (5), die ein Verbindungsmittel bildet und in die mindestens eine leitfähige Leitung (6) integriert ist, wobei diese zwei Bestandteile aus einem Stück hergestellt sind und alle beide eine flache Struktur von geringer Dicke aufweisen.

2. Innenverkleidungsteil (1) nach Anspruch 1, **dadurch gekennzeichnet, dass** die längliche Verlängerung (5) des Funktionselements (4) einen Abschnitt (5') umfasst, der sich frei über die hintere Seite (2') der Stützschicht (2) hinaus erstreckt und der einen Bereich oder einen Ort (7) des elektrischen Anschlusses aufweist, der integriert oder angesetzt ist und sich vorzugsweise an dem oder in der Nähe des freien Endes des Abschnitts (5') befindet.

3. Innenverkleidungsteil (1) nach einem der Ansprüche 1 und 2, **dadurch gekennzeichnet, dass** das Funktionselement (4) eine Stützstruktur (8) mit flächiger Erstreckung umfasst, die mindestens eine elektrische oder elektronische Komponente (9) in der Art einer Stützschicht trägt oder in der Art einer Matrix einschließt, welche die beabsichtigte Funktion erfüllt, wenn sie aktiviert oder elektrisch gespeist wird, wobei sich diese Stützstruktur (8) vorteilhafterweise ebenfalls in einem Stück an der länglichen Verlängerung (5) erstreckt und ihre Versorgungs- oder Übertragungsleitung(en) (6) und gegebenenfalls ihren Bereich oder ihren Ort (7) des elektrischen Anschlusses stützt oder einschließt.

4. Innenverkleidungsteil (1) nach einem der Ansprüche 1 bis 3, **dadurch gekennzeichnet, dass** die Deckschicht (3), die das Funktionselement (4) bedeckt, sich über die peripheren Grenzen dieses Letzteren hinaus erstreckt, die Stützschicht (2) teilweise oder vollständig bedeckt und aus einem Material besteht, das, wenigstens in Bezug auf chemische Haftung, mit demjenigen der Stützschicht (2) kompatibel ist, wobei es in Bezug auf Zusammensetzung, Aussehen, Farbe und/oder Haptik identisch oder verschieden ist.

5. Innenverkleidungsteil (1) nach Anspruch 4, **dadurch gekennzeichnet, dass** die Deckschicht (3) die Stützschicht (2) nur teilweise bedeckt, wobei die jeweiligen sichtbaren oder freiliegenden Flächen der zwei Schichten (2 und 3), die zusammen die sichtbare Seite (1') des Teils (1) bilden, miteinander bündig sind.

6. Innenverkleidungsteil (1) nach Anspruch 4, **dadurch gekennzeichnet, dass** die Deckschicht (3) die Stützschicht (2) nur teilweise bedeckt, wobei die jeweiligen sichtbaren oder freiliegenden Flächen der zwei Schichten (2 und 3), die zusammen die sichtbare Seite (1') des Teils (1) bilden, zwischen sich einen Versatz mit einer Höhendifferenz (d) aufweisen, wobei die Deckschicht (3) in Bezug auf die Stützschicht (2) um mindestens einen Teil ihrer Dicke vorstehend oder zurückstehend ist und einen Rand oder einen Absatz (3'), der positiv oder negativ ist, in Bezug auf diese Stützschicht (2) bildet.

7. Innenverkleidungsteil (1) nach einem der Ansprüche 4 bis 6, **dadurch gekennzeichnet, dass** die Deckschicht (3) die Stützschicht (2) nur teilweise bedeckt, wobei eine periphere linienförmige Vertiefung (10), wie zum Beispiel eine Rille oder eine Nut, den von der Deckschicht (3) bedeckten Bereich der Oberfläche der Stützschicht (2) begrenzt, wobei diese Vertiefung (10) vorteilhafterweise wenigstens einen Teil des umlaufenden seitlichen Randes (3') der Deckschicht (3) aufnimmt.

8. Innenverkleidungsteil (1) nach einem der Ansprüche 1 bis 7, **dadurch gekennzeichnet, dass** das Material, aus dem die Stützschicht (2) besteht, wenigstens in einem unter dem Funktionselement (4) befindlichen Bereich eine wenigstens teilweise wabenförmige Struktur aufweist, in die zum Beispiel mehrere mit Luft gefüllte Hohlräume integriert sind.

9. Innenverkleidungsteil (1) nach einem der Ansprüche 1 bis 8, **dadurch gekennzeichnet, dass** ein Hauptfunktionsteil (4', 9) des Funktionselements (4) mit dünner flächiger Struktur beiderseits vollständig von der Stützschicht (2) bzw. von der Deckschicht (3) bedeckt ist, wobei er in die Dicke des Teils (1) durch Einkapselung zwischen diesen zwei Schichten (2 und 3) integriert ist, und/oder dadurch, dass dieser Funktionsteil (4', 9) und die ein Verbindungsmittel bildende längliche Verlängerung (5) an derselben flächigen Stützstruktur (8) angebracht oder in diese integriert sind, wobei sie somit zusammen ein Funktionselement (4) bilden, das strukturell aus einem Stück besteht.

10. Verfahren zur Herstellung eines Innenverkleidungsteils (1) für ein Fahrzeug, welches eine dreidimensionale Form, eine sichtbare Seite (1') und einen mehrschichtigen Aufbau aufweist, wobei das Teil (1) mindestens eine Stützschicht (2) und mindestens eine Deckschicht (3), welche die sichtbare Fläche (1') des Teils (1) liefert, umfasst, wobei mindestens ein Funktionselement (4) mit dünner flächiger Struktur in die Dicke des Teils (1) integriert ist und dabei sandwichartig zwischen der Stütz- und der Deckschicht (3, 4) angeordnet ist, wobei dieses Funktionselement (4) mindestens ein Verbindungs- oder Anschlussmittel (5) zwecks seiner Stromversorgung und/oder der Übertragung elektrischer Signale umfasst,
wobei das Verfahren **dadurch gekennzeichnet ist, dass** es darin besteht, ein Funktionselement (4) mit einem Verbindungsmittel (5) in der Form einer länglichen Verlängerung, die Teil des Funktionselements (4) ist, bereitzustellen, dieses Funktionselement (4) in einer Spritzform (11) mit zwei Teilen (11' und 11"), nämlich einem Stempel und einer Matrize, oder mit drei Teilen (11', 11", 11‴), nämlich einem Stempel und zwei Matrizen, anzubringen, indem es an einem ersten Teil (11') der Form (11), der den Stempel bildet, so angeordnet wird, dass ein Endabschnitt (5') der länglichen Verlängerung (5) in einem dichten Hohlraum (12) des Stempels (11') aufgenommen ist, die Form (11) durch Annäherung der zwei den Stempel (11') und die Matrize (11") bildenden Teile oder des Stempels (11') und einer ersten Matrize (11") aneinander und ihren Kontakt miteinander zu schließen, um so eine Spritzkammer (13) zu bilden, und das Material einzuspritzen, das dazu bestimmt ist, die Stützschicht (2) zu bilden, wobei die längliche Verlängerung (5) somit direkt in das Material der Stützschicht (2) eingebettet ist, die sie durchquert, mit Ausnahme ihres Endabschnitts (5'), die Spritzkammer (13) durch Ändern des Abstands der zwei Teile (11' und 11") der Form (11) im geschlossenen Zustand oder durch Entfernen der ersten Matrize (11") und Ersetzen derselben durch die zweite Matrize (11‴), die an den Stempel (11") angenähert und mit ihm in Kontakt gebracht wird, zu verändern, das Material einzuspritzen, das dazu bestimmt ist, die Deckschicht (3) zu bilden, welche dann das Funktionselement (4) und die Stützschicht (2) bedeckt, wobei diese Letztere und die Deckschicht (4) somit durch direkten Kontakt und stoffschlüssige Verbindung außerhalb des von dem Funktionselement (4) eingenommenen Bereichs miteinander verbunden werden, und schließlich die Form (11) zu öffnen und das hergestellte Verkleidungsteil (1) zu entnehmen.

11. Herstellungsverfahren nach Anspruch 10, **dadurch gekennzeichnet, dass** die Änderung des Abstands der zwei Teile der Form (11) im geschlossenen Zustand dieser Letzteren durch Anbringung, an der Trennebene der Form (11), von Einstellkeilen (15, 15') mit unterschiedlichen Dicken bewirkt wird.

12. Herstellungsverfahren nach einem der Ansprüche 10 und 11, **dadurch gekennzeichnet, dass** die Aufnahme des Endabschnitts (5') der länglichen Verlängerung (5) in einem dichten Hohlraum (12) des Stempels (11') darin besteht, den Abschnitt (5') in einem Hohlraum des Stempels (11') anzubringen, der mit einem Mittel zum dichten Verschließen (14) versehen ist, und das Schließmittel (14) zu betätigen, um so den Abschnitt (5') vom Inneren der Spritzkammer (13) zu isolieren und ihn einzuklemmen, um ihn festzuhalten, ebenso wie das Funktionselement (4) am Stempel (11') und in der Form (11).

13. Herstellungsverfahren nach einem der Ansprüche 10 bis 12, **dadurch gekennzeichnet, dass** der dichte Hohlraum (12) einen Hohlraum umfasst, der in dem Stempel (11') ausgebildet ist und in dem ein Keil oder ein beweglicher Stopfen (14) angebracht ist, der geeignet ist, die Öffnung (12') des Hohlraums (12) zur Oberfläche des Stempels (11') hin und damit zur Spritzkammer (13) hin zu verschließen, wobei dieser Stopfen (14) verlagert werden kann zwischen einer eingeschobenen Position, in der er die Öffnung (12') freigibt, und einer ausgezogenen Position, in der er die Öffnung (12') auf dichte Weise verschließt, wobei er mit der Oberfläche des Stempels (11') bündig ist und wobei er den Endabschnitt (5') der länglichen Verlängerung (5), der in den Hohlraum (12) eingeführt ist, gegen den Rand der Öffnung (12') presst.

14. Herstellungsverfahren nach einem der Ansprüche 10 bis 13, **dadurch gekennzeichnet, dass** ein Schäumungsmittel mit dem Material eingespritzt wird, das dazu bestimmt ist, die Stützschicht (2) zu bilden.

15. Herstellungsverfahren nach einem der Ansprüche 10 bis 14, **dadurch gekennzeichnet, dass** die sichtbare Seite der Deckschicht (3) und gegebenenfalls ein Teil der sichtbaren Fläche der Stützschicht (2) nach Entnahme des Verkleidungsteils (1) aus der Form (11) mindestens einer zusätzlichen Oberflächenbehandlung unterzogen wird (werden), wie etwa einer Abscheidung, einer chemischen Behandlung, einer mechanischen Behandlung oder dergleichen.

16. Form (11) für die Durchführung des Herstellungsverfahrens nach einem der Ansprüche 10 bis 15, welche zwei relativ zueinander bewegliche Bestandteile umfasst, nämlich einen Stempel (11'), der mit Mitteln (16, 16') zur Einspritzung der Materialien, die dazu bestimmt sind, die Stützschicht (2) und die Deckschicht (3) zu bilden, und vorteilhafterweise mit Mitteln (17) zum Ausdrücken des erhaltenen Verkleidungsteils (1) versehen ist, und mindestens eine Matrize (11", 11"'), die den Oberflächenzustand der sichtbaren Seite (1') des Teils (1) definiert und durch Zusammenwirken mit dem Stempel (11') eine Spritzkammer (13) begrenzen kann, welche zwei unterschiedliche Volumina aufweisen kann, in Abhängigkeit zum Beispiel von den Dicken von verschiedenen angebrachten Einstellkeilen (16, 16'),
wobei die Form (11) **dadurch gekennzeichnet ist, dass** der Stempel (11') einerseits einen Hohlraum (12) zur Aufnahme einer länglichen Verlängerung (5) eines an dem Stempel (11') angeordneten flächigen Funktionselements (4) aufweist, wobei dieser Hohlraum eine Öffnung (12') zur Spritzkammer (13) hin aufweist, und andererseits ein Mittel (14) zum dichten Verschließen dieses Hohlraums (12), genauer, seiner Öffnung (12'), welches ermöglicht, die längliche Verlängerung (5) festzuklemmen und einen Endteil (5') davon in Bezug auf die Spritzkammer (13) zu isolieren.

## Claims

1. Interior trim part (1) for a vehicle, having a three-dimensional shape, a visible face (1') and a multilayer construction, said part (1) comprising at least one support layer (2) and at least one cladding layer (3) which contributes to the visible surface (1') of the part (1), at least one functional element (4) with a thin surface structure being integrated into the thickness of said part (1) by being sandwiched between the support and cladding layers (2, 3), the latter consisting of injection-moulded layers and being mutually assembled by direct contact and material bonding outside the zone occupied by the functional element (4) considered, the latter comprising at least one connecting or coupling means (5) for supplying electrical power to the latter and/or transmitting electrical signals, which means extends through the support layer (2), while being directly embedded in its constituent material, up to the rear face (2') of this layer, opposite to the visible face (1'),
which part (1) is **characterized in that** the connecting means (5) consists of an elongate extension forming part of the functional element (4), and
**in that** the or each functional element (4) is composed, on the one hand, of a main functional part (4', 9) arranged between the support and cladding layers (2 and 3) and in direct contact therewith, and, on the other hand, of the elongate lateral extension (5) forming the connecting means and integrating at least one conductive line (6), these two constituent components being made in one piece and both having a flat structure of small thickness.

2. Interior trim part (1) according to Claim 1, **characterized in that** the elongate extension (5) of the functional element (4) comprises a portion (5') which extends freely beyond the rear face (2') of the support layer (2) and which has an electrical connection zone or site (7), which is integrated or attached, preferably located at or near the free end of said portion (5').

3. Interior trim part (1) according to either one of Claims 1 and 2, **characterized in that** the functional element (4) comprises a support structure (8) with surface extension, which bears in the manner of a support layer, or integrates in the manner of a matrix, at least one electrical or electronic component (9) performing the targeted function when it is activated or electrically powered, this support structure (8) advantageously also extending in one piece at the elongate extension (5) and supporting or integrating its power supply or transmission line (s) (6) and possibly its electrical connection zone or site (7).

4. Interior trim part (1) according to any one of Claims 1 to 3, **characterized in that** the cladding layer (3) which covers the functional element (4) extends beyond the peripheral limits of the latter, partially or completely covers the support layer (2) and consists of a material compatible, at least in terms of chemical adhesion, with that of said support layer (2) while being identical or different in terms of composition, appearance, colour and/or feel.

5. Interior trim part (1) according to Claim 4, **characterized in that** the cladding layer (3) only partially covers the support layer (2), the visible or exposed respective surfaces of the two layers (2 and 3), which together form the visible face (1') of the part (1), being flush with each other.

6. Interior trim part (1) according to Claim 4, **characterized in that** the cladding layer (3) only partially covers the support layer (2), the visible or exposed respective surfaces of the two layers (2 and 3), which together form the visible face (1') of the part (1), having between them an offset with discontinuity (d), said cladding layer (3) protruding or being set back with respect to the support layer (2) by at least part of its thickness and constituting a positive or negative edge or shoulder (3') with respect to this support layer (2).

7. Interior trim part (1) according to any one of Claims 4 to 6, **characterized in that** the cladding layer (3) only partially covers the support layer (2), a peripheral linear depression (10), such as a groove or a slot, for example, delimiting the zone of the surface of the support layer (2) covered by the cladding layer (3), this depression (10) advantageously receiving at least part of the circumferential lateral edge (3') of said cladding layer (3).

8. Interior trim part (1) according to any one of Claims 1 to 7, **characterized in that** the material of which the support layer (2) is composed has, at least in a region located below the functional element (4), an at least partially cellular structure integrating, for example, a plurality of air-filled cavities.

9. Interior trim part (1) according to any one of Claims 1 to 8, **characterized in that** a main functional part (4', 9) of the functional element (4) with a thin surface structure is completely covered, on either side, by the support layer (2) and by the cladding layer (3), respectively, by being integrated into the thickness of said part (1) by encapsulation between these two layers (2 and 3), and/or **in that** this functional part (4', 9) and the elongate extension (5) forming the connecting means are mounted on, or integrated in, one and the same surface support structure (8) thus constituting together a functional element (4) structurally in one piece.

10. Method for manufacturing an interior trim part (1) for a vehicle, having a three-dimensional shape, a visible face (1') and a multilayer construction, said part (1) comprising at least one support layer (2) and at least one cladding layer (3) which provides the visible surface (1') of the part (1), at least one functional element (4) with a thin surface structure being integrated into the thickness of said part (1) by being sandwiched between the support and cladding layers (3, 4), this functional element (4) comprising at least one connecting or coupling means (5) for supplying electrical power to the latter and/or transmitting electrical signals,
which method is **characterized in that** it consists in providing a functional element (4) with a connecting means (5) in the form of an elongate extension forming part of said functional element (4), in placing this functional element (4) in an injection mould (11) with two parts (11' and 11"), namely a punch and a die, or with three parts (11', 11", 11‴), namely a punch and two dies, by arranging it on a first part (11') of the mould (11) forming a punch in such a way that an end portion (5') of the elongate extension (5) is housed in a sealed cavity (12) of said punch (11'), in closing the mould (11) by bringing together and placing in mutual contact the two parts forming the punch (11') and the die (11"), or the punch (11') and a first die (11"), so as to form an injection chamber (13), and in injecting the material intended to form the support layer (2), the elongate extension (5) being thus embedded directly in the material of the support layer (2) through which it passes, with the exception of its end portion (5'), in modifying the injection chamber (13) by modifying the spacing of the two parts (11' and 11") of the mould (11) in the closed state, or by spacing apart the first die (11") and replacing it with the second die (11‴), which is moved closer to and brought into contact with the punch (11"), in injecting the material intended to form the cladding layer (3) which will cover the functional element (4) and the support layer (2), the latter and the cladding layer (4) thus being mutually assembled by direct contact and material bonding outside the zone occupied by the functional element (4), and finally in opening the mould (11) and in extracting the manufactured trim part (1).

11. Manufacturing method according to Claim 10, **characterized in that** the modification of the spacing of the two parts of the mould (11) in the closed state of the latter is carried out by placing, at the parting line of said mould (11), adjustment shims (15, 15') of different thicknesses.

12. Manufacturing method according to either one of Claims 10 and 11, **characterized in that** the housing of the end portion (5') of the elongate extension (5) in a sealed cavity (12) of the punch (11') consists in placing said portion (5') in a cavity of the punch (11') provided with a sealed closure means (14) and in actuating said closure means (14) so as to isolate said portion (5') from the interior of the injection chamber (13) and to clamp it to hold it in place, as well as the functional element (4) on the punch (11') and in the mould (11).

13. Manufacturing method according to any one of Claims 10 to 12, **characterized in that** the sealed cavity (12) comprises a cavity formed in the punch (11') and in which there is mounted a shim or a movable plug (14) capable of closing the opening (12') of the cavity (12) towards the surface of the punch (11'), and therefore towards the injection chamber (13), this plug (14) being able to be moved between a retracted position in which it releases said opening (12') and a deployed position in which it sealingly closes said opening (12'), while being flush with the surface of the punch (11') and while clamping the end portion (5') of the elongate extension (5) inserted into the cavity (12) against the edge of said opening (12').

14. Manufacturing method according to any one of Claims 10 to 13, **characterized in that** a foaming agent is injected with the material intended to form the support layer (2).

15. Manufacturing method according to any one of Claims 10 to 14, **characterized in that** the visible face of the cladding layer (3), and possibly a visible surface part of the support layer (2), is/are subjected, after extraction of the trim part (1) from the mould (11), to at least one additional surface treatment, such as deposition, chemical treatment, mechanical treatment or the like.

16. Mould (11) for carrying out the manufacturing method according to any one of Claims 10 to 15, comprising two constituent parts movable relative to each other, namely a punch (11') provided with means (16, 16') for injecting the materials intended to constitute the support layer (2) and the cladding layer (3) and, advantageously, means (17) for ejecting the trim part (1) obtained, and at least one die (11", 11‴) defining the surface state of the visible face (1') of the part (1) and capable of defining, by cooperation with the punch (11'), an injection chamber (13), which may have two different volumes, depending for example on the thicknesses of different adjustment shims (16, 16') put in place, which mould (11) is **characterized in that** the punch (11') comprises, on the one hand, a cavity (12) for receiving an elongate extension (5) of a surface functional element (4) placed on said punch (11'), said cavity comprising an opening (12') towards the injection chamber (13), and, on the other hand, a means (14) for sealed closure of this cavity (12), more precisely its opening (12'), making it possible to clamp said elongate extension (5) and to isolate an end part (5') thereof with respect to the injection chamber (13).
